# EUROPEAN PATENT SPECIFICATION

(11) **EP 0 988 612 B1**
(45) Date of publication and mention of the grant of the patent: **16.01.2002**
(21) Application number: 98920696.6
(22) Date of filing: 02.06.1998
(51) Int. Cl.: G06K 7/00

(54) **PANEL MOUNT SMART CARD CONNECTOR**
TAFELMONTIERTER CHIPKARTENVERBINDER
CONNECTEUR DE CARTE A MICROPROCESSEUR POUR MONTAGE SUR PANNEAU

(30) Priority: 09.06.1997 EP 97401286; 29.04.1998 EP 98107767
(43) Date of publication of application: 29.03.2000
(73) Proprietor: THE WHITAKER CORPORATION, Wilmington, DE 19808 (US)
(72) Inventor: DESPRETZ, Jean-Jacques, F-95810 Vallangoujard (FR); LAGUETTE, Maurice, F-78540 Vernouillet (FR); LINDEBERG, Paul, F-78600 Maisons-Laffitte (FR)
(74) Representative: Heinz-Schäfer, Marion
(86) International application number: IB9800843
(87) International publication number: WO9857290

(56) References cited:
- US-A- 5 305 182
- US-A- 5 490 792

## Description

This invention relates to a smart card connector for mounting to a panel, the connector for connection to a smart card (IC or Chip Card).

"Smart card" is a common name for describing a card typically the size of a credit card with an integrated circuit therein. Smart cards are used in a wide variety of applications such as security systems, payment systems, TV set-top boxes for pay-TV etc. Consumer articles such as pay-TV set-top boxes typically comprise electronic circuitry within a shielded box or frame to prevent electro-magnetic noise reception and emission. A smart card connector is usually fixed to a front outer decorative panel of the device such that a smart card can be inserted into connector through a slot in the outer front panel. The smart card connector within the device is connected to a printed circuit board within the shielding shell of the device. The connector therefore transverses an inner front shielding panel which is provided with a cutout therefor. Design changes to the decorative front outer panel or to the device, or different apparatus designs, poses a problem in that the inner front shielding panel requires a large cutout in order to accommodate changes in positioning of the smart card connector. In addition, it is often necessary to design different smart card connectors for adaptation to various designs of outer front panels. Particularly for consumer articles, it would be desirable to provide a smart card connector that is more versatile and in particular that enables latitude in the design of device boxes whilst in addition ensuring greater shielding effectiveness of electronic components in the device.

JP-A-1076690 discloses a smart card connector for mounting to a front panel of a box receiving electronic components therein as described in the pre-characterising portion of claim 1. The smart card connector includes a housing with electrical terminals for contacting the smart card and a mounting portion for fixing the connector to a front shielding panel of the box, the mounting frame having a housing portion having a card receiving slot and having a pair of extensions extending from side walls of the mounting frame.

It is an object of this invention to provide a smart card connector for mounting in a box or housing with electronic components mounted therein, the smart card connector being mountable with greater versatility with respect to differing housing designs whilst nevertheless ensuring effective shielding of the components.

Objects of this invention have been achieved by providing the smart card connector according to claim 1. Disclosed herein is a smart card connector comprising a housing with electrical terminals mounted therein for biasing against conductive contact pads of a smart card received in a slot of the housing, the smart card connector for mounting in a box receiving electronic components therein, the smart card contacts further comprising connection sections for electrical connection to the electronic components, the connector further comprising a mounting portion for fixing the connector to a front panel of the box such that the card receiving slot of the connector is in alignment with a card receiving slot to the panel for receiving the smart card therethrough, wherein the connector further comprises a panel mounting frame separate from the housing, the mounting frame comprising housing portion having a card receiving slot extending therethrough for guiding the smart card into the connector housing, the connector housing securely mountable to the frame at a specified depth with respect to the card receiving slot of the frame considering the direction of insertion of the card, the mounting frame being securely fixable to the panel wherein a pair of extensions extend from side walls of the mounting frame housing portion and comprises latching members and guide members for securely guiding and fixing the connector housing thereto at a specified distance with respect to the housing portion.

Advantageously therefore, the separate mounting member and connector enables a single connector to be produced for mounting at different distances with respect to a panel depending on the constructive features of the box, and in particular depending on the distance of the decorative front panel with respect to an inner shielding panel, and the desired depth of insertion of a card into the device. In view of the ability to adjust the position of the connector with respect to the shielding panel, variations in design of the front panel may be effected without requiring new connector designs, but merely adjusting the depth of insertion by selecting the appropriate mounting frame. The mounting frame may also be provided with a number of securing or latching positions of the connector within the mounting frame thereby requiring only one mounting frame design. Because the smart card connector is fixed to the inner front shielded panel, rather than the outer front decorative panel , a minimum size cutout through the shielding panel can be provided thereby enhancing shielding effectiveness.

Further advantageous aspects of this invention will be described in the claims or will be apparent form the following description and drawings.

Embodiments of this invention will be described by way of example with reference to the figures in which:
Figure 1 is a perspective view of a smart card connector in the disassembled state;
Figure 2 is a perspective view of a smart card connector in the assembled stated, the connector housing being latched to one of the mounting frames for positioning at a specified distance from the card receiving slot of the mounting frame;
Figure 3 is a view similar to that of Figure 2 but with a mounting frame for positioning of the connector at a closer distance to he card receiving slot thereof;
Figure 4 is a perspective view of a plurality of smart card connectors mounted to a panel;
Figure 5 is a perspective view of the underside of a smart card connector housing;
Figure 6 is a cross sectional view of two smart card connectors in a device, showing insertion of a card therein;
Figure 7 is perspective a view of another embodiment of a smart card connector in the disassembled state;
Figure 8 is a similar view to that of Figure 7 with the smart card connector in the assembled state and terminated to a large ribbon cable for connection to electronics;
Figure 9 is a perspective view of a smart card housing and terminals terminated to a small ribbon cable;
Figure 10 is a perspective view of another embodiment of a smart card connector according to this invention, where the terminal housing is in the process of being assembled to the mounting frame;
Figure 11 is a perspective view of the embodiment of figure 10, viewed from an underside thereof;
Figure 12 is a perspective view of the mounting frame of the embodiment of figures 10 and 11;
Figure 13 is a perspective view of the embodiment of figure 10 about to be mounted to a panel;
Figure 14 is view similar to figure 13 showing the connector in the fully assembled and locked position on the panel;
Figures 15, 16 and 17 are plan views of the connector of figure 10 showing successive steps in assembly of the connector to a panel;
Figure 18 is a plan view of another embodiment;
Figure 19 is a perspective view of a mounting frame of the embodiment of figure 18;
Figure 20 is a perspective view of the yet another embodiment of a smart card connector according to this invention.

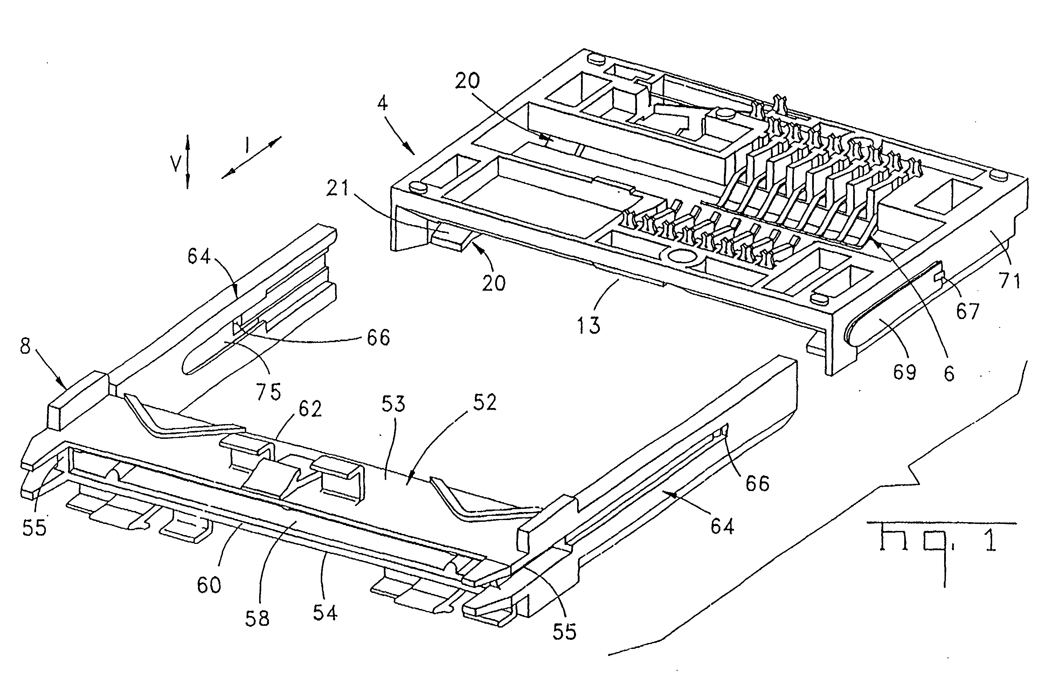

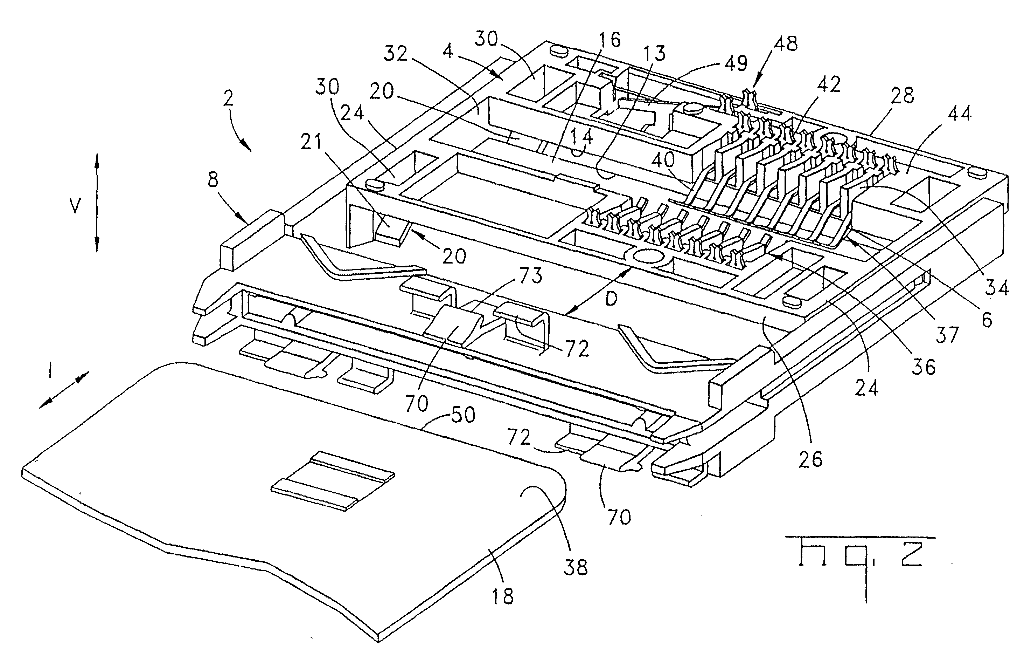

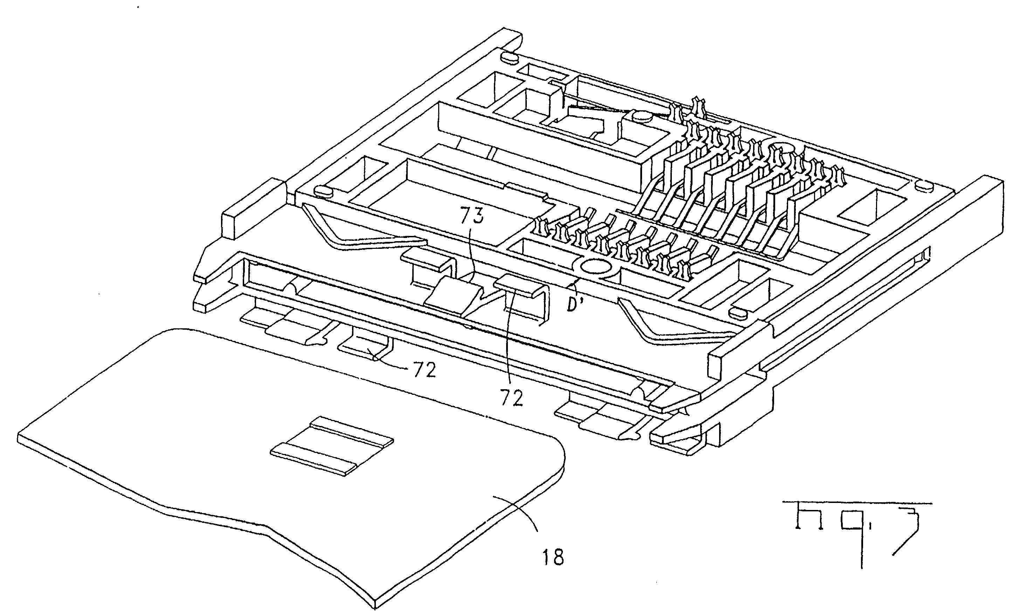

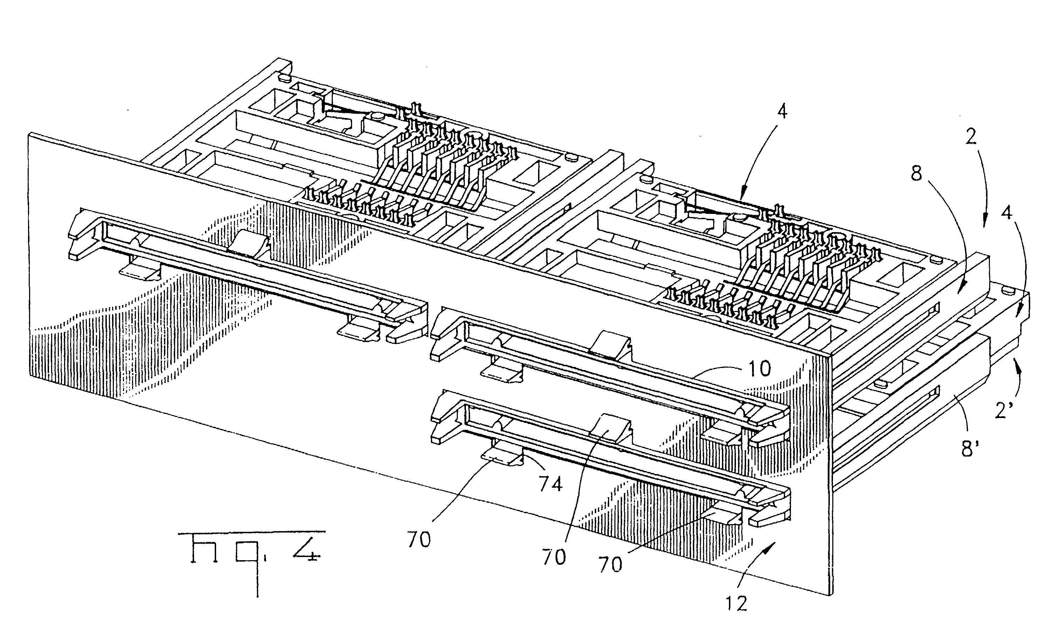

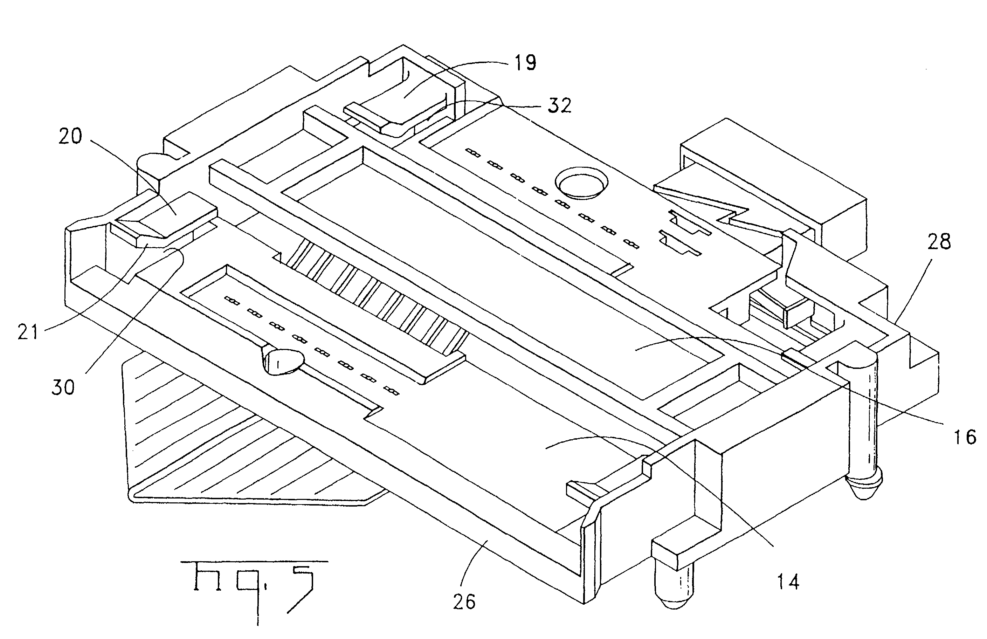

Referring to Figures 1-6, a smart card connector 2 comprises a housing 4 with a plurality of electrical terminals 6 mounted in the housing, and a mounting frame 8 separate from the housing for mounting through a cutout 10 of a panel 12.

The housing 4 comprises a card receiving slot 13 extending therein and defined by upper wall portions 14 and lower wall portions 16 opposed to the upper wall portions and separated therefrom by a gap similar to the thickness of a smart card 18 received therebetween. The upper and lower wall portions are not continuous, but merely provide guides at certain portions for securely guiding the card within the slot. For example, the lower wall portions 16 comprise guide portions 19, 20 with funnel shaped mouths or entry portions 21 for guiding and locating the card into the slot, the guide portions 19, 20 having relatively small surface areas in relation to the size of the smart card connector and positioned proximate opposed sides 24 of the housing 4. The card receiving slot 13 extends from proximate a front end (or card receiving end) 26 of the housing 4, to proximate a rear end 28. The guide portions 19 proximate the rear end 28 are resiliently biased against the upper surface 38 of the card 18, in order to frictionally grip the card in the fully inserted position.

In order to enable particularly cost effective manufacture of the connector housing 4, the lower wall portions 16, 19, 20 are aligned with cavities 30, 32 through the top wall 14 such that the injection moulding die from which the plastic housing is produced, can be of particularly simple construction. The latter also enhances the reliability of manufacture (reducing or eliminating the need to core pins) whilst also increasing the manufacturing speed. In other words, the housing 4 can be injection moulded between a pair of relatively simple moulding dies that are axially separated after cooling of the moulded plastic. Axial separation of the dies is enabled by providing forms and shapes of the housing that are accessible from projecting die shapes extending in the axial direction.

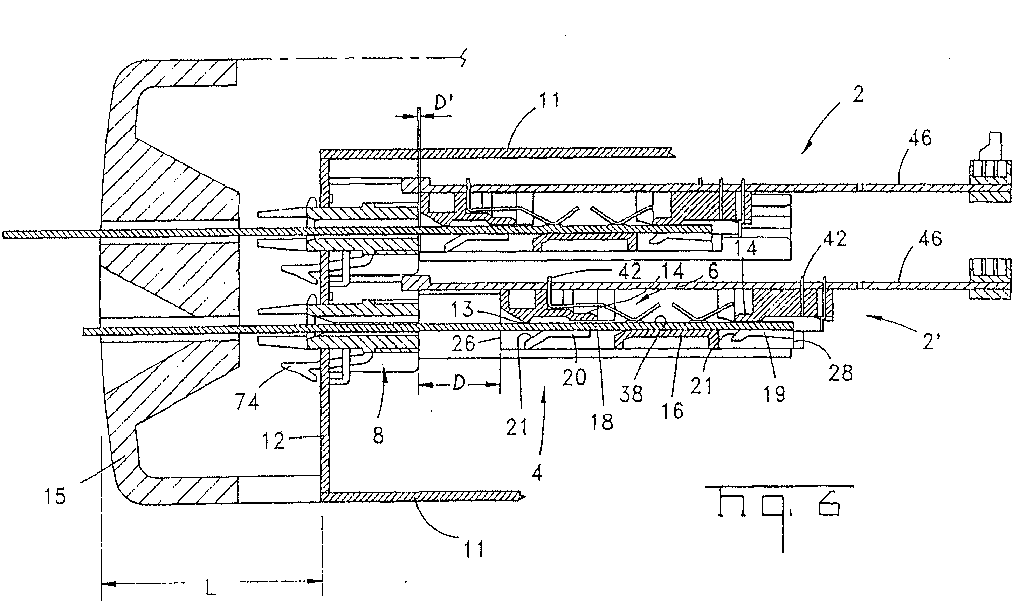

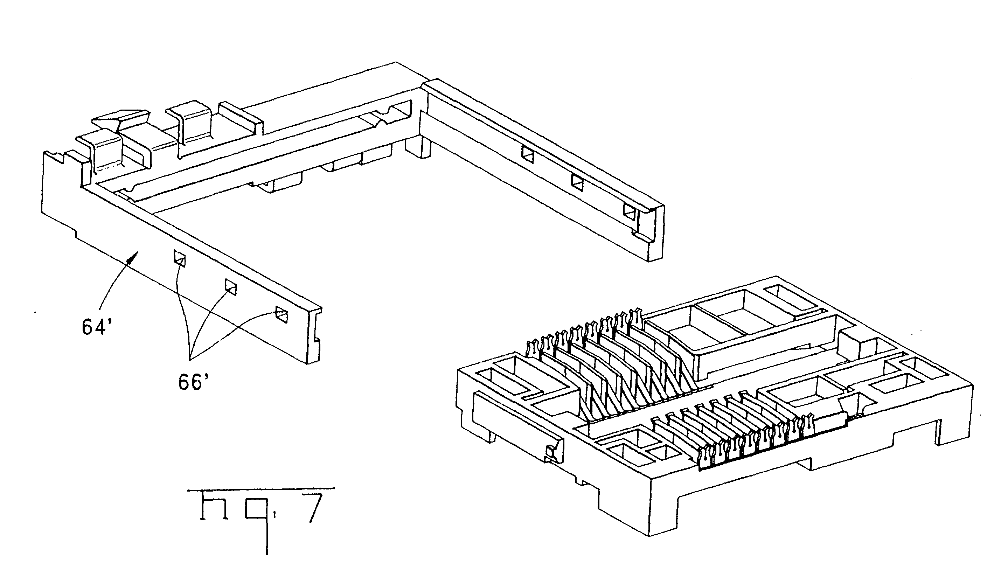

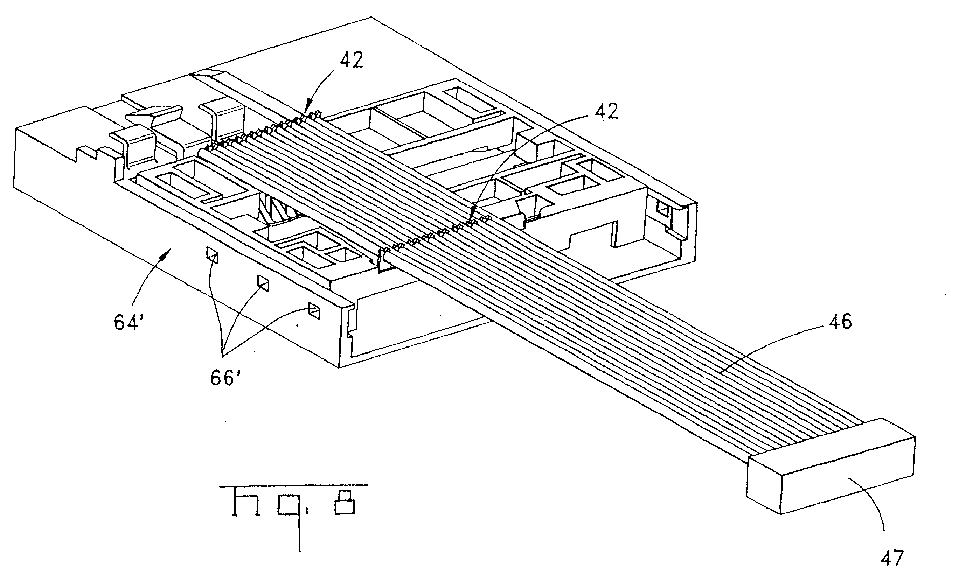

Stamped and formed electrical terminals 6 are provided within vertically extending slots (the vertical direction indicated by the arrow V in Figure 2) 34, the terminals 6 arranged in a juxtaposed arrangement in two rows 36, 37 facing each other for contacting corresponding pair of contact pads on the upper surface 38 of the smart card 18. The stamped and formed terminals 6 have resilient cantilever beam contact arms 40 for biasing against the card inserted in the card receiving slot 13. The terminals 6 are provided with insulation displacement contact (IDC) section 42 projecting beyond an upper outer face 44 of the housing. As best seen in Figures 6 and 8, a conducting cable 46 with a plurality of insulated conductors (a ribbon cable) can be terminated to the IDC contacts 42 by pressing the cable onto the contacts which pierce through the insulation and contact the inner conducting stands of the cable, in a single termination operation. The vertical terminal receiving slots 34 extend to the upper outer face 44 of the housing such that the contacts can be automatically stitched or mounted into the housing from the outer face in a simple and rapid manner. The connector is further provided with a pair of switching contacts 48 with contact beams 49 that are engaged by a mating end 50 of the smart card 18 when it reaches the fully inserted position, for indicating full insertion of the card 18 in the slot 13.

Referring to figures 1-3, the mounting frame 8 comprises a slot housing portion 52 having opposed top and bottom walls 53, 54 joined at their ends by side walls 55 so as to form a card receiving entry slot 58 into the connector. The housing portion 52 extends from a front card receiving end 60 to a rear housing receiving end 62 facing the housing 4. The frame further comprises housing fixing extensions 64 extending from each side wall 55 rearwardly beyond the housing receiving end 62, the fixing extensions 64 extending a length roughly equal to the length of the connector housing 4 when considering the direction of insertion (I) of the card 18 into the connector. The extensions 64 are provided with latching members in the form of latching shoulders 66 for engaging with corresponding latching members in the form of latching protrusions 67 of the connector housing 4 for securing the connector housing at a specified distance D, D' (see Figures 2, 3 and 6) with respect to the mounting frame housing portion 52. The variation in the distance D between the connector housing and the frame depends on the position of the latching shoulder 66 in the mounting frame extension 64. In the embodiment of Figures 1-3 and 6, different mounting frames 8 are proposed for positioning the connector housings at different distances with respect to a panel, for example as shown in Figure 4 where the connector 2 is positioned closed to the panel 12 and the connector 2' is positioned further away from the panel 12. The connector housing and terminals remain identical, but the position of the latch shoulders 66 in the extensions 64 of the mounting frame 8, 8' is modified, i.e. different mounting frames are provided for each specific distance.

The mounting frame 8 comprises resilient latches 70 for engaging edges of the panel cutout 10 for securely latching the frame to the panel. Resilient cantilever abutment members 72 may be provided in proximity of the latches and spaced from the latching shoulder 73 at a distance slightly less than the thickness of the panel 12 for resilient abutment against a rear face of the panel. The latter ensures that the latching shoulders 73 are biased with a certain resilient spring force against the front face of the panel 12 thereby absorbing a certain amount of play in the thickness of the panel and enhancing secure tolerance free attachment of the connector to the panel. The latches 70 are received in little cutouts 74 such that the panel cutout 10 remains along most of its length close to the bottom, top and side walls 54, 53, 55 of the housing portion 52. This is to ensure that the panel cutout remains as small as possible for enhanced shielding effectiveness. The panel 12 forms part of a shielding box structure 11 enclosing electronic components of a device for reducing electro-magnetic emission and reception.

The mounting frame card receiving slot 58 also effects the guiding and locating of the card 18 through the panel 12 and into the connector housing 4. The cutouts 74 and latches 70 are not positioned symmetrically, for example in the embodiment of Figures 1-4 there are two latches 70 attached to the bottom wall 54 and one latch centrally positioned attached to the top wall 52, thereby ensuring that the connector is mounted in the correct orientation with respect to the panel i.e. the connector top wall 44 is facing upwards as shown in Figure 4.

Depending therefore on the position (L) of an outer decorative front panel or wall 15 of a device (see Figure 6), with respect to the inner panel 12, a mounting frame with a particular depth is provided and the connector housing latched thereto such that a desired depth (D or D') between the connector contacts 6 and outer front panel 15 or a device is achieved. In prior solutions, the smart card connector was directly mounted to the decorative front panel, which often required large cutouts in the shielding panel 12 thereby leading to increased electro-magnetic noise emission and reception. In another embodiment as shown in Figures 7 and 8, it would also be possible to provide a plurality of latching members 66' along the extensions 64' such that only one mounting frame needs to be provided and allows the various positionings of the connector with respect to the panel. This embodiment is not always desirable, because once a forward most position is effected by mistake, it may be tedious to unlatch the mounting frame and connector housing and move back the housing to the desired position. In certain instances it may be desirable to provide only one latching position per mounting frame as in the embodiment of Figures 1-3 to ensure that such mistakes do not occur.

As best seen in Figure 1, the connector housing 4 may further comprise a T-shaped guide 69 projecting from side walls 71 of the housing for engaging in a corresponding T-shaped groove 75 in the mounting frame extensions 64 so as to guide the connector securely with respect to the extensions 64 and also to maintain the extensions against the connector side walls 71 for a secure and rigid assembly that is not easily unlatched.

A particularly cost-effective yet versatile smart card connector system for mounting to a panel is thus provided. Further advantageous is the minimal panel cutout that is required through an inner shielding panel of a device.

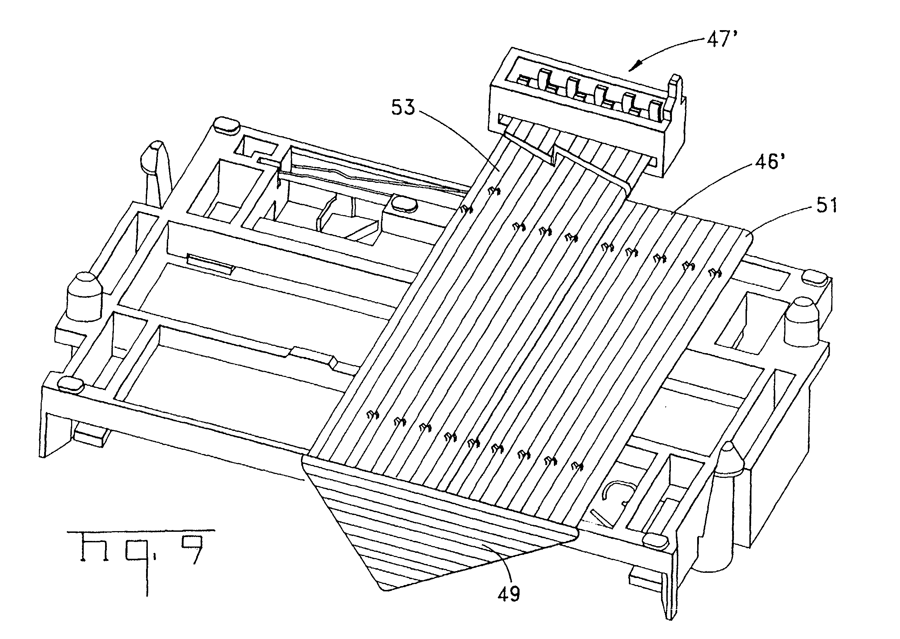

Referring to Figure 9, the smart card connector housing and terminals are terminated to a ribbon cable 46' that is narrower than the ribbon cable 46 of the embodiment shown in Figure 8. In fact, the ribbon cable 46' has half the number of wire conductors than the cable 46. The large ribbon cable 46 serves to provide connections to two long rows of IDC contacts 42 of the terminals 6. In the embodiments shown, the smart card connector is capable of connection to smart cards according to two different standards, a French standard and an international standard. These standards define contacts on the smart card positioned at different positions, the smart card connector therefore having double the number of contacts than needed for a smart card. The contact positions of the French standard and the international standard are adjacent each other, such that a first half of the ribbon cable 46 serves to connect to contacts of a smart card with the French standard, and the other half of the conductors of the ribbon cable 46 serve to connect to a card with the international standard. The large ribbon cable 46 is however relatively expensive, and also requires a larger connector 47 at the printed circuit board connection end, than the connector 47' of the embodiment of Figure 9. In the embodiment of Figure 9, the smaller ribbon cable 46' is folded over at a fold 49, where two branches 51, 53 of the cable 46' are thus provided in an adjacent and parallel manner. A cheap ribbon cable and connector 46', 47' can thus be provided, whilst nevertheless enabling connection to contacts for smart cards according to different standards.

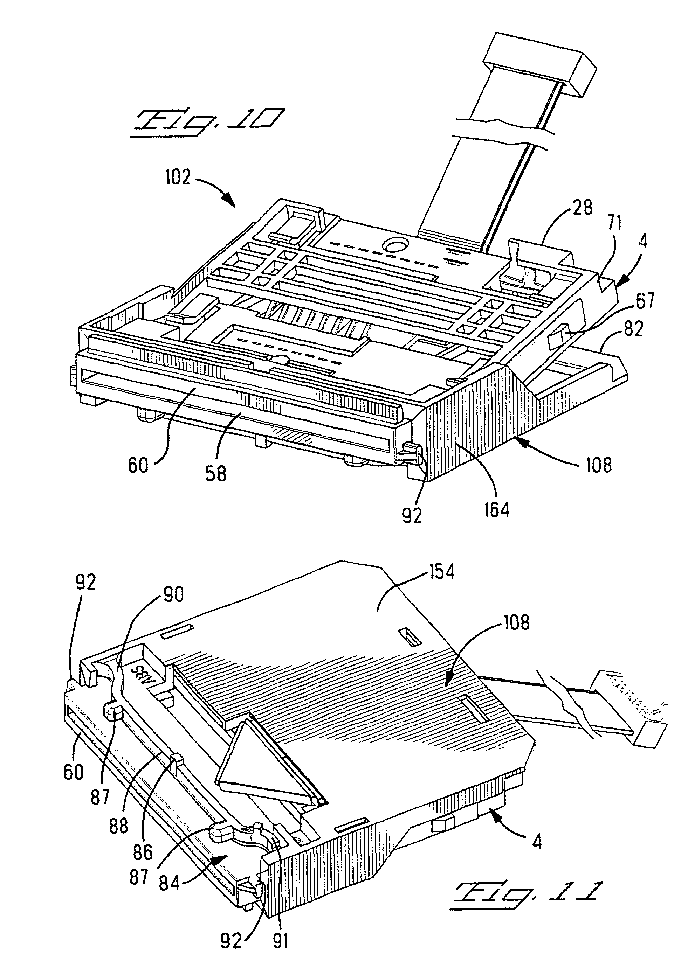

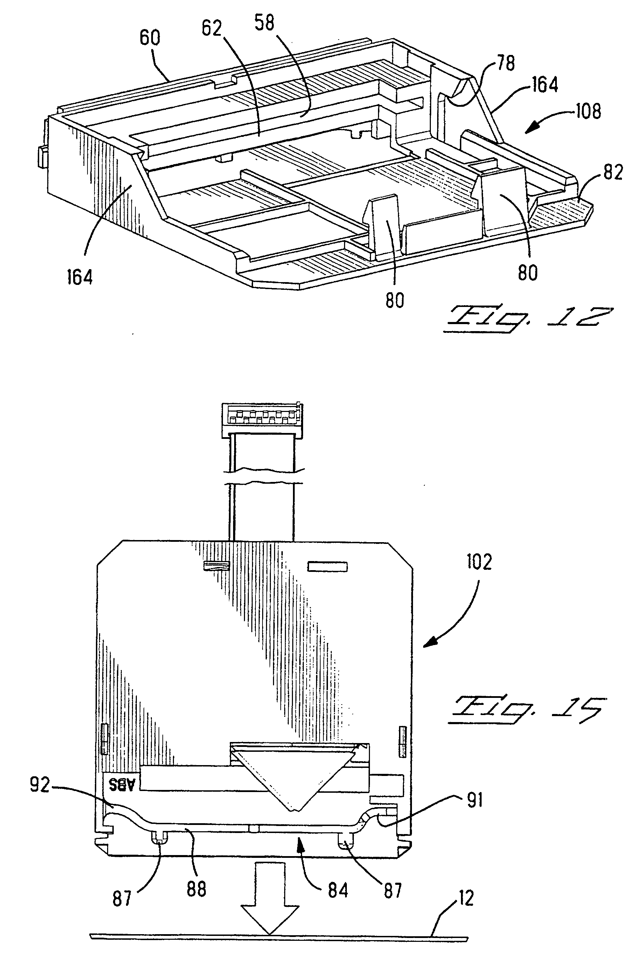

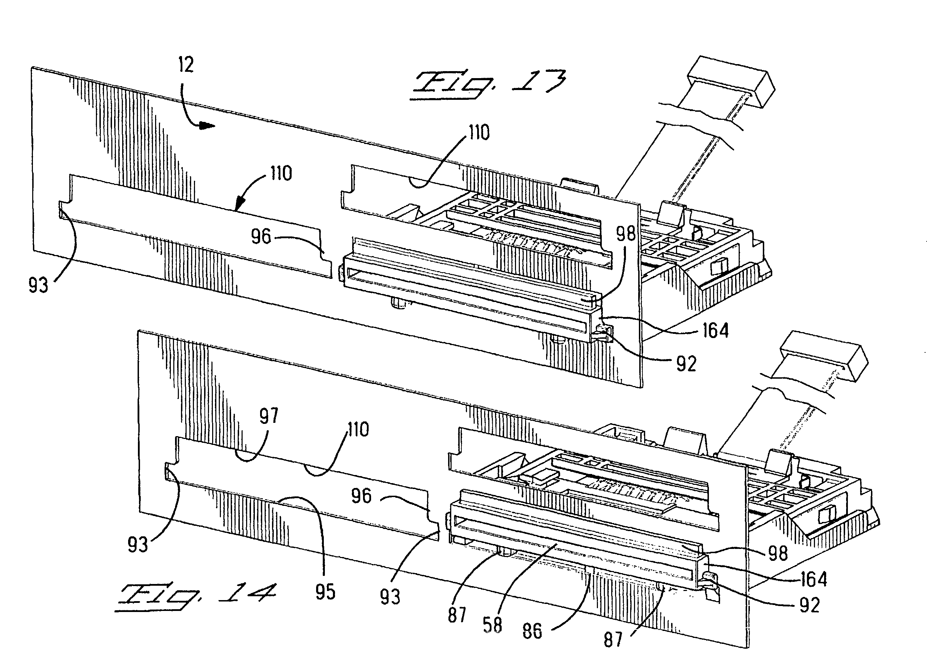

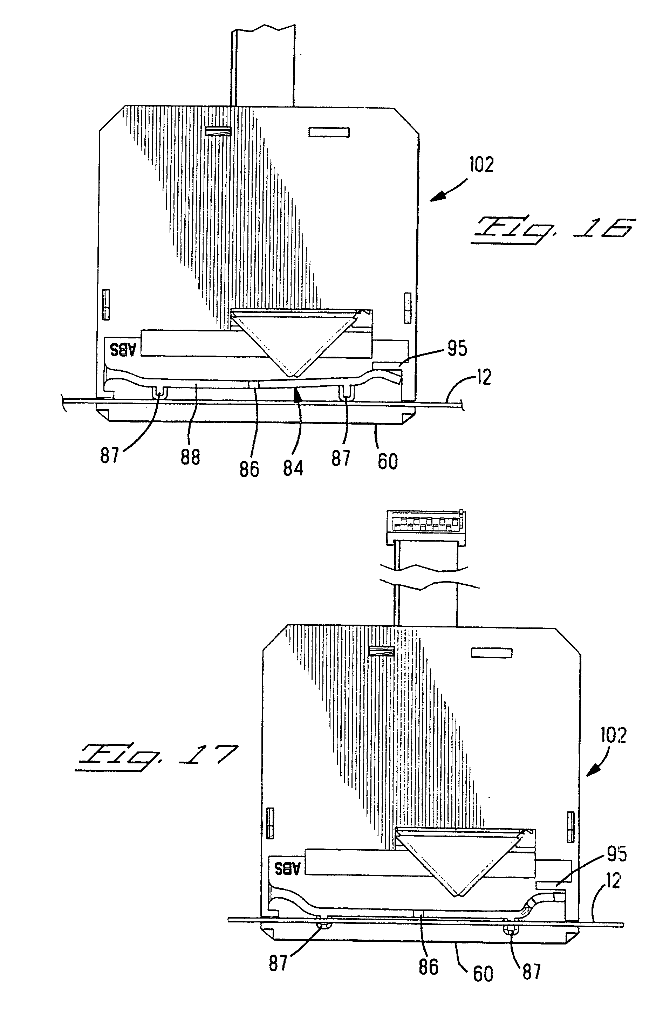

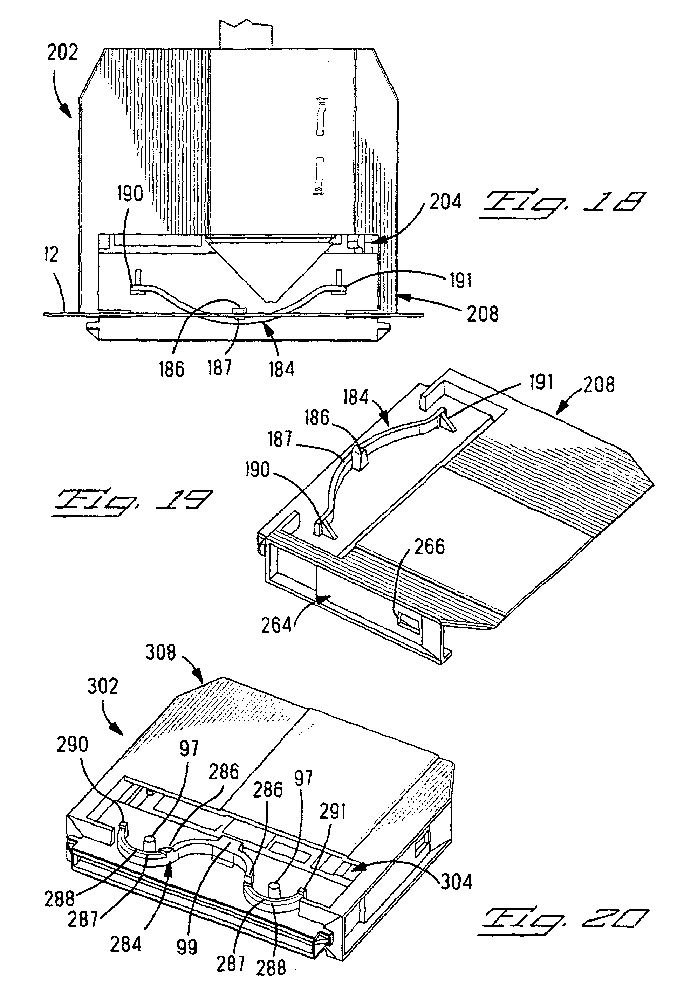

Referring to figures 10-17, another embodiment of a smart card connector 102 will now be described. Many of the features of this embodiment are substantially the same as the previously described embodiments, and therefore only the major differences will be further described. The smart card connector 102 comprises a housing 4 with terminals therein, mountable in a mounting frame 108. In this embodiment, the housing 4 is inserted into the mounting frame 108 at an angle as best seen in figure 10, and then pivoted into the fully secured position as shown in figure 13. The mounting frame 108 as best seen in figure 12, is provided with housing engagement and positioning ledges 78 projecting from sidewalls 164 of the mounting frame, the ledges 78 positioned proximate the card receiving end 60 of the mounting frame. As in the previous embodiments, the mounting frame has a card receiving entry slot 58 extending from the front card receiving end 60 to a rear housing receiving end 62 facing the housing 4. The housing 4 is thus inserted under the ledges 78 at an angle and the rear end 28 of the housing pivoted behind retention ledges 80 extending from a rear base wall 82 of the mounting frame. It may be noted that the housing 4 may be provided with latches 67 on the side 71 as in the previous embodiments, such that the housing 4 may also be inserted into mounting frames similar to the previous embodiments. The mounting frame 108 has certain advantages over the previous embodiments, in that it allows rapid assembly of the housing to the mounting frame that is easy to verify visually and audibly. In addition, the mounting frame sides 164 are interconnected by the base wall 82 which provides a robust yet simple construction to locate and secure the housing 4.

Referring mainly to figures 11 and 13-17, the smart card connector 102 is further provided with a resiliently mounted (and/or locking member) 84 that comprises one of more hammer projections 86 mounted on a spring 88 that in this embodiment is in the form of a cantilever spring beam attached at one end 90 to a side wall 164 of the mounting frame 108, and extending to a free end 91 proximate the opposed side wall. The resilient hammer or locking member 84 is in this embodiment arranged adjacent a bottom or lower side 154 of the mounting frame 108. In order to actuate the spring, one of more locking projections 87 project from the spring beam 88 towards a front card receiving end 60 of the connector. The projections 87 are for engaging the panel 12 during assembling of the smart card connector 102 thereto, as best seen in figure 16, and subsequent locking of the connector to the panel as best seen in figure 14.

The connector, and in particular the mounting frame 108 thereof, is further provided with locking shoulders or tabs 92 that project beyond opposed sides 164 of the mounting frame. The panel cutout 110 is provided with a complementary shape with recesses 93 that allow the locking tabs or shoulders 92 to pass through the panel cutout in a first position as seen in figure 13.

In the first (panel insertion) position as shown in figure 13, the spring beam 88, and in particular the projections 87 thereof, abut the panel 12 as shown in figure 16, thereby resiliently biasing the spring beam away from the connector front card receiving end 60 such that the spring beam free end 91 biases against a complementary shoulder 95 of the mounting frame. Once the locking tabs 92 have been inserted through the panel 12, the connector 102 is raised (with relation to the orientation of figures 13 and 14) such that the locking tabs 92 engage over sides 96 of the panel cutout 110. In the fully assembled position as shown in figure 14, the spring beam locking projections 87 are biased into the panel cutout 110 between the lower edge 95 thereof and the connector whereby the hammer projection 86 snaps against the panel to provide an audible click indicating to the operator complete assembly and secure locking of the smart card connector to the panel. The projections 87 also serve as locking projections that prevent the connector from moving to the lowered position, due to insertion of the projections 87 between the connector and the lower edge 95 of the panel cutout 110. As best seen in figure 14, the connector and in particular the mounting frame is provided with a locking tab 98 that projects over the upper edge 97 of the panel cutout 110.

A particularly secure and easily verifiable locking of the connector to a panel is thus provided. The locking is also compact and particularly robust in view of the rigid locking tabs 98, 92 engaging around the edges 96, 97 of the panel cutout. The connector can be released from the panel by pushing inwards the locking projections 87 and lowering the connector until the locking tabs 92 are aligned with the panel cutout recesses 93.

Referring to figures 18 and 19, another embodiment of a smart card connector 202 with housing 4 and mounting frame 208 is shown. In this embodiment, the locking member 184 has a different design to the locking member 84 of the previous embodiment. The locking member 184 comprises an outwardly bowed spring beam 188 attached at opposed ends 191, 190 and comprising a hammer 186 substantially centrally positioned between the ends. The central portion 187 of the spring beam 184 performs the function of the locking protrusions 87 according to the previous embodiment. In this embodiment, the mounting frame 208 is adapted to receive the connector housing 4 slideably along the side extensions 266 similar to the embodiment of figure 1.

In figure 20, yet another connector embodiment 302 is shown with a locking member 284 fixed at a central position 99 to the mounting frame 308 and extending therefrom to opposed free ends 290, 291 via outwardly bowed spring beams 288 that project in their central portions 287 towards the front card receiving end and perform substantially the equivalent function as the locking projections 87 of the embodiment of figure 11. Each of the spring beams 288 is provided with a hammer 286 for producing an audible click upon a full assembly of the connector to the panel. Anti-overstress elements in the form of projections 89 may be provided behind the spring beams 288 in order to limit biasing thereof to prevent overstressing.

As can be seen from the various embodiments described above, the connector according to the invention may be provided with various means of mounting the connector housing to the mounting frame, and the connector may be provided with different means for locking the connector to a panel and producing an audible click if desired.

## Claims

1. A smart card connector (2, 102, 202, 302) for mounting to a front panel (15) of a box receiving electronic components therein, the connector comprising a housing (4) with electrical terminals (6) mounted therein for biasing against conductive contact pads of a smart card (18) received in a slot (13) of the housing (4), the terminals comprising connection sections for electrical connection to the electronic components, the connector comprising a mounting portion for fixing the connector to a front shielding panel (12) of the box, wherein the connector further comprises a mounting frame (8, 108, 208, 308) separate from the housing, the mounting frame comprising a housing portion (52) having a card receiving slot (58) extending therethrough for guiding the smart card into the connection housing, the connector housing securely mountable to the mounting frame at a specified depth (D, D') with respect to the card receiving slot of the frame considering the direction (I) of insertion of the card, the mounting frame being securely fixable to the front shielding panel (12), wherein a pair of extensions (64, 64) extend from side walls (55) of the mounting frame housing portion (52) **characterised in that** the extensions (64, 64') comprise latching members (66, 66', 266) and guide members (75, 264) for securely guiding and fixing the connector housing (4) thereto at a specified depth (D, D') with respect to the housing portion (52).

2. The connector of claim 1 wherein the connector housing (4) comprises top wall portions (14) and bottom wall portions (16) separated by and defining the card receiving slot (13) of the housing, the bottom wall portions (16) being positioned opposite cutouts (30, 32) in the top wall such that the housing (4) can be injection molded in a simple die.

3. The connector of any one of the preceding claims wherein the electrical terminals (6) are mountable in cavities (34) of the housing (4) that extend prismatically from an upper outer surface (44) of the housing such that the contacts can be stitched into the housing.

4. The connector of any one of the preceding claims wherein the mounting frame housing portion (52) comprises opposed top and bottom walls (53, 54) joined at their ends by side walls (55) thereby forming the card receiving slot (58) extending in the card insertion direction (I).

5. The connector of any one of the preceding claims wherein the mounting frame housing portion (52) has latching members (70, 87, 187, 287, 92, 98) for engaging an edge of a cutout (10, 110) of a panel (12) such that the housing portion (52) is insertable through the cutout (10, 110) of the panel and fixable thereto.

6. The connector of any one of the preceding claims wherein the housing portion (52) of the mounting frame (8, 108, 208, 308) extends from a front card receiving end (60) to a rear housing receiving end (62) facing the housing (4), the extensions (64, 164, 82, 80) of the mounting frame extending rearwardly in the insertion direction (I) from the housing portion (52) for fixing the housing thereto.

7. The connector of any one of the preceding claims wherein the complementary guide members (69, 75) have complementary substantially T-shape profiles extending substantially prismatically in the direction (I) of insertion of the card.

8. The connector of any one of the preceding claims wherein the latch extensions (64, 164, 80, 82) comprise a plurality of latch members (66') for latching the housing (4) at various certain distances (D, D') to the mounting frame housing portion (52).

## Patentansprüche

1. Chipkartenverbinder (2, 102, 202, 302) für das Montieren an einer vorderen Schalttafel (15) eines Kastens, das elektronische Bauteile darin aufnimmt, wobei der Verbinder ein Gehäuse (4) mit darin montierten elektrischen Anschlußklemmen (6) für ein Vorspannen gegen leitende Kontaktanschlußflächen einer Chipkarte (18) aufweist, die in einem Schlitz (13) des Gehäuses (4) aufgenommen wird, wobei die Anschlußklemmen Verbindungsabschnitte für eine elektrische Verbindung mit den elektronischen Bauteilen aufweisen, wobei der Verbinder einen Montageabschnitt für das Befestigen des Verbinders an einer vorderen Abschirmschalttafel (12) des Kastens aufweist, worin der Verbinder außerdem einen Montagerahmen (8, 108, 208, 308) separat vom Gehäuse aufweist, wobei der Montagerahmen einen Gehäuseabschnitt (52) aufweist, der einen Kartenaufnahmeschlitz (58) aufweist, der sich dort hindurch für das Führen der Chipkarte in das Verbindergehäuse erstreckt, wobei das Verbindergehäuse sicher am Montagerahmen in einer vorgeschriebenen Tiefe (D, D') mit Bezugnahme auf den Kartenaufnahmeschlitz des Rahmens montierbar ist, wobei die Richtung (I) des Einsetzens der Karte in Betracht zu ziehen ist, wobei der Montagerahmen sicher an der vorderen Abschirmschalttafel (12) befestigt werden kann, worin sich ein Paar Verlängerungen (64, 64) von den Seitenwänden (55) des Gehäuseabschnittes (52) des Montagerahmens erstreckt, **dadurch gekennzeichnet, daß** die Verlängerungen (64, 64') Einklinkelemente (66, 66', 266) und Führungselemente (75, 264) für das sichere Führen und Befestigen des Verbindergehäuses (4) daran in einer vorgeschriebenen Tiefe (D, D') mit Bezugnahme auf den Gehäuseabschnitt (52) aufweisen.

2. Verbinder nach Anspruch 1, bei dem das Verbindergehäuse (4) obere Wandabschnitte (14) und untere Wandabschnitte (16) aufweist, die durch den Kartenaufnahmeschlitz (13) des Gehäuses getrennt werden und diesen definieren, wobei die unteren Wandabschnitte (16) gegenüberliegend den Aussparungen (30, 32) in der oberen Wand so positioniert sind, daß das Gehäuse (4) in einem einfachen Werkzeug spritzgegossen werden kann.

3. Verbinder nach einem der vorhergehenden Ansprüche, bei dem die elektrischen Anschlußklemmen (6) in Hohlräumen (34) des Gehäuses (4) montierbar sind, die sich prismenförmig von einer oberen Außenfläche (44) des Gehäuses aus so erstrecken, daß die Kontakte in das Gehäuse eingeheftet werden können.

4. Verbinder nach einem der vorhergehenden Ansprüche, bei dem der Gehäuseabschnitt (52) des Montagerahmens eine gegenüberliegende obere und untere Wand (53, 54) aufweist, die an ihren Enden durch Seitenwände (55) verbunden werden, wodurch der Kartenaufnahmeschlitz (58) gebildet wird, der sich in der Karteneinsetzrichtung (I) erstreckt.

5. Verbinder nach einem der vorhergehenden Ansprüche, bei dem der Gehäuseabschnitt (52) des Montagerahmens Einklinkelemente (70, 87, 187, 287, 92, 98) für einen Eingriff eines Randes einer Aussparung (10, 110) einer Schalttafel (12) aufweist, so daß der Gehäuseabschnitt (52) durch die Aussparung (10, 110) der Schalttafel einsetzbar ist und daran befestigt werden kann.

6. Verbinder nach einem der vorhergehenden Ansprüche, bei dem sich der Gehäuseabschnitt (52) des Montagerahmens (8, 108, 208, 308) von einem vorderen Kartenaufnahmeende (60) zu einem hinteren Gehäuseaufnahmeende (62), dem Gehäuse (4) gegenüberliegend, erstreckt, wobei sich die Verlängerungen (64, 164, 82, 80) des Montagerahmens nach hinten in der Einsetzrichtung (I) vom Gehäuseabschnitt (52) aus für das Befestigen des Gehäuses daran erstrecken.

7. Verbinder nach einem der vorhergehenden Ansprüche, bei dem die komplementären Führungselemente (69, 75) komplementäre im wesentlichen T-förmige Profile aufweisen, die sich im wesentlichen prismenförmig in der Richtung (I) des Einsetzens der Karte erstrecken.

8. Verbinder nach einem der vorhergehenden Ansprüche, bei dem die Einklinkverlängerungen (64, 164, 80, 82) eine Vielzahl von Einklinkelementen (66') für das Einklinken des Gehäuses (4) in verschiedenen bestimmten Abständen (D, D') am Gehäuseabschnitt (52) des Montagerahmens aufweisen.

## Revendications

1. Connecteur de carte à puce (2, 102, 202, 302) destiné à être monté sur un panneau avant (15) d'un carter recevant des composants électroniques, le connecteur comprenant un boîtier (4) avec des bornes électriques (6) qui y sont montées pour exercer une poussée contre des plots de contact conducteurs d'une carte à puce (18) reçue dans une fente (13) du boîtier (4), les bornes comprenant des sections de connexion en vue de la connexion électrique aux composants électroniques, le connecteur comprenant une partie de montage destinée à fixer le connecteur à un panneau de blindage avant (12) du carter, le connecteur comprenant en outre un cadre de montage (8, 108, 208, 308) séparé du boîtier, le cadre de montage comprenant une partie de boîtier (52) comportant une fente de réception de la carte (58) le traversant pour guider la carte à puce dans le boîtier du connecteur, le boîtier du connecteur pouvant être monté fermement sur le cadre de montage au niveau d'une profondeur spécifiée (D, D') par rapport à la fente de réception de la carte du cadre, compte tenu de la direction (I) d'insertion de la carte, le cadre de montage pouvant être fixé fermement au panneau de blindage avant (12), une paire d'extensions (64, 64) s'étendant à partir des parois latérales (55) de la partie de boîtier du cadre de montage (52), **caractérisé en ce que** les extensions (64, 64') comprennent des éléments de verrouillage (66, 66', 266) et des éléments de guidage (75, 264) pour guider de manière sûre et fixer le boîtier de connecteur (4) au niveau d'une profondeur spécifiée (D, D') par rapport à la partie de boîtier (52).

2. Connecteur selon la revendication 1, dans lequel le boîtier du connecteur (4) comprend des parties de paroi supérieure (14) et des parties de paroi inférieure (16) séparées par la fente de réception de la carte (13) du boîtier et définissant celle-ci, les parties de paroi inférieure (16) étant positionnées en un point opposé aux entailles (30, 32) dans la paroi supérieure, de sorte que le boîtier (4) peut être moulé par injection dans une simple matrice.

3. Connecteur selon l'une quelconque des revendications précédentes, dans lequel les bornes électriques (6) peuvent être montées dans des cavités (34) du boîtier (4), s'étendant en forme prismatique à partir d'une surface externe supérieure (44) du boîtier, de sorte que les contacts peuvent être cousus dans le boîtier.

4. Connecteur selon l'une quelconque des revendications précédentes, dans lequel la partie de boîtier du cadre de montage (52) comprend des parois supérieure et inférieure opposées (53, 54) reliées au niveau de leurs extrémités par des parois latérales (55), formant ainsi la fente de réception de la carte (58) s'étendant dans la direction de l'insertion de la carte (I).

5. Connecteur selon l'une quelconque des revendications précédentes, dans lequel la partie de boîtier du cadre de montage (52) comprend des éléments de verrouillage (70, 87, 187, 287, 92, 98) destinés à s'engager dans un bord d'une entaille (10, 110) d'un panneau (12), de sorte que la partie de boîtier (52) peut être insérée à travers l'entaille (10, 110) du panneau et peut y être fixée.

6. Connecteur selon l'une quelconque des revendications précédentes, dans lequel la partie de boîtier (52) du cadre de montage ((8, 108, 208, 308) s'étend d'une extrémité avant de réception de la carte (60) vers une extrémité arrière de réception du boîtier (62) faisant face au boîtier (4), les extensions (64, 164, 82, 80) du cadre de montage s'étendant vers l'arrière dans la direction de l'insertion (I) de la partie de boîtier (52) pour y fixer le boîtier.

7. Connecteur selon l'une quelconque des revendications précédentes, dans lequel les éléments de guidage complémentaires (69, 75) ont des profils complémentaires, ayant pratiquement une forme en U, s'étendant de manière pratiquement prismatique dans la direction (I) de l'insertion de la carte.

8. Connecteur selon l'une quelconque des revendications précédentes, dans lequel les extensions de verrouillage (64, 164, 80, 82) comprennent plusieurs éléments de verrouillage (66') destinés à verrouiller le boîtier (4) à différentes distances données (D, D') à la partie de boîtier du cadre de montage (52).
